# EUROPEAN PATENT SPECIFICATION

(11) **EP 0 762 909 B1**
(45) Date of publication and mention of the grant of the patent: **12.08.1998**
(21) Application number: 95919586.8
(22) Date of filing: 31.05.1995
(51) Int. Cl.: A62B 35/04, F16B 45/00

(54) **YIELDING ATTACHMENT LINK**
NACHGIEBIGES VERBINDUNGSGLIED
DISPOSITIF PLIANT DE FIXATION

(30) Priority: 01.06.1994 GB 9410910
(43) Date of publication of application: 19.03.1997
(73) Proprietor: LATCHWAYS LIMITED, Calne, Wiltshire SN11 9PL (GB)
(72) Inventor: FLUX, Peter, Robert, Wiltshire SN11 0JZ (GB); PATTERSON, David, John, Wiltshire SN11 0BA (GB)
(74) Representative: Watkins, David
(86) International application number: GB9501250
(87) International publication number: WO9532759

(56) References cited:
- EP-A- 0 309 183
- GB-A- 183 025
- US-A- 1 363 401
- US-A- 1 407 797
- US-A- 4 470 480
- US-A- 5 286 130

## Description

The present invention relates to safety equipment and, in particular, to an attachment link for attaching a karabiner or similar safety hook to a rigid or flexible elongate member such as a safety line.

The invention is particularly suited for use with a safety line securing system such as that described in the Applicant's European Patent No. 0 124 189, although its applicability is by no means exclusive to such systems. The aforementioned patent describes a rotary device which supports a rigid or flexible elongate element serving as a safety line whilst allowing a moveable element that travels along the elongate element to pass the rotary device without needing to be detached. The rotary device supporting the elongate element comprises at least one rotatable wheel provided with a series of recesses at spaced locations around its periphery, the adjacent recesses being separated by a projecting part of the wheel. A cooperating slipper part is mounted on the wheel and has formations which inter-engage with complementary formations on the projecting parts of the wheel. The elongate element is held in a fixed position relative to the slipper member. A moveable element mounted on the elongate element is moved past the rotary device by capture in one of the recesses of the rotatable wheel as it is rotated through the slipper member, carrying the moveable element with it.

Regardless of whether the elongate element is a rigid hand rail or a flexible lifeline, the smoothness of passage of the moveable element past the rotary device is determined by the shape of the moveable element. A smooth transition is vital if the rotary device is used in a height-safety fall-arrest situation, since any tendency to stall during passage past the device could be the direct cause of an accident. For such an application, it is therefore desirable to use a moveable element which has a substantially smooth profile. This allows a wider range of approach angles to the rotary device, further improving its suitability for safety applications.

The disadvantage of commercially available karabiners/hooks is that they seldom have the necessary smooth profile. Furthermore, they are usually of such a large cross-section that they are unsuitable for reception in the rotary device supporting the elongate element. In summary, the vast majority of karabiners/hooks currently in use are incompatible with the rotary devices that are available.

It is therefore an object of the present invention to provide a universal attachment link which is suitable for use in conjunction with the majority of fall-arrest/restraint karabiners/hooks in use around the world today. It is a further object of the present invention to provide a universal attachment link which has the desired profile and dimensions for smooth passage past rotary devices such as those described above for supporting elongate elements such as safety lines.

The invention is a link for attaching a load-bearing attachment to an elongate element, the link comprising a substantially C-shaped straddling portion having a pair of legs each provided with a connecting eye, said legs having a gap therebetween to accommodate an elongate element and said connecting eyes being aligned to receive a portion of a load-bearing attachment, characterised in that each of said legs includes a convoluted portion interposed between the straddling portion and its respective connecting eye in which the material of the leg is bent back upon itself to form a series of hairpin loops.

Preferably, the arrangement is such that receipt of a load-bearing attachment through the connecting eyes of the link forms a closed loop which prevents disengagement of the link from an elongate element accommodated between said legs. The connecting eyes are disposed in close alignment with each other to facilitate connection thereto of a single karabiner/hook, but they may be oriented at any convenient angle to the longitudinal axis of the elongate member. In the majority of cases the common axis of the connecting means will either be transverse to the longitudinal member or parallel to it.

In circumstances in which it is desirable to minimise the effects of friction between the elongate member and the load attached thereto, the attachment link of the present invention may be provided with a low friction means on its straddling portion. The low friction means may be a series of rings or beads of low friction material such as phosphor-bronze or plastic mounted on the straddling portion. In use, this is the most likely part of the attachment link to be in frictional contact with the elongate element along which it slides. This has the advantage of minimising wear on both the elongate element and the attachment link. Selection of the low friction material may also help to eliminate sparking in combustible atmospheres. The arc of the straddling portion itself may also be provided with a low friction coating to reduce friction/wear still further where it is in contact with such rings and/or beads.

In another embodiment, the attachment link may be provided with one or more rolling-element bearings to facilitate the carriage of substantial loads at low friction/wear rates. Such an arrangement is especially useful in supporting the weight of so-called "fall-arrest blocks". These are devices of substantial mass which deploy an inertial lifeline for fall-arrest purposes.

In an especially preferred form of the invention, the attachment link is provided with deformable legs which absorb energy in the event of a fall and thereby minimise the effect of shock loads. This is valuable, not only in minimising the harmful effects of a fall to personnel, but also in reducing the deleterious effect of shock loading on the elongate member itself.

In certain designs of flexible horizontal safety line, the applied load can be magnified. In such circumstances, the shock-absorbing embodiment is particularly useful in reducing structural anchor forces acting on the system. Safety line systems employing a rigid element are more prone to local anchorage failure because of high shock loads. Here, again, the energy absorbing embodiment is helpful in attenuating fall-arrest loads further.

Moreover, by deformation, this embodiment provides a visual indication that a fall has occurred and therefore has significant secondary safety value.

The invention will now be described by way of example only with reference to the drawings, in which:
- Figures 1a and 1b: show, respectively, front and side views of an attachment link according to the invention;
- Figure 2: shows simplified front and side views of an attachment link having friction-reducing elements on its straddling portion;
- Figure 3: shows simplified front and side views of an attachment link provided with rolling-element bearings on its straddling portion;
- Figure 4: shows the sequence of steps through which the attachment link of the invention passes as it traverses a rotary cable support, and
- Figure 5: illustrates the suitability of the invention for traversing such supports in a variety of orientations.

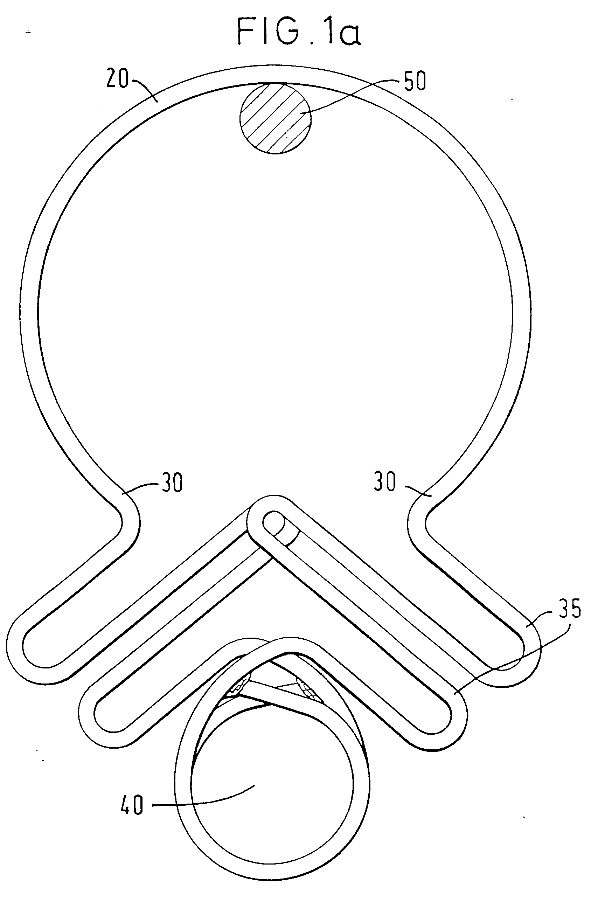

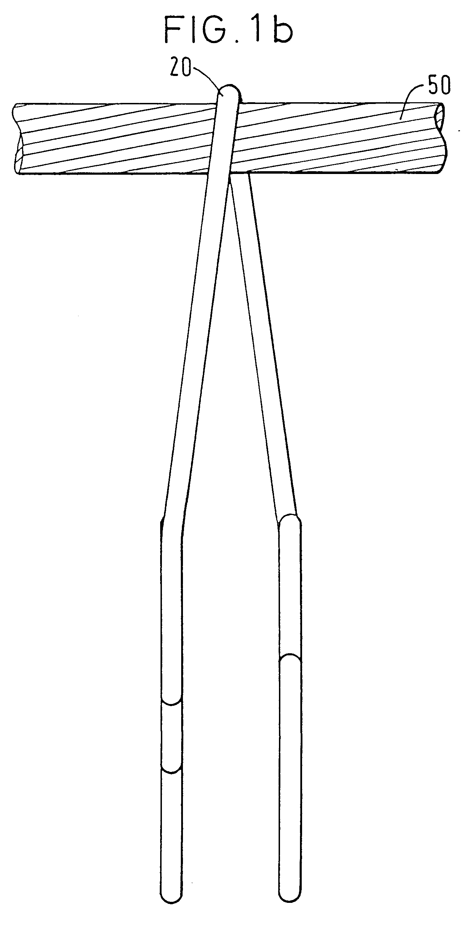

Referring now to Figures 1a and 1b, the basic construction of the attachment link 10 according to the invention comprises a straddling portion 20 of substantially C-shape from which a pair of legs 30 depends. Each leg 30 is provided at its end remote from the straddling portion with a connecting eye 40 through which the connecting portion of a karabiner/hook (not shown) is passed in use.

In the illustrated arrangement, the legs 30 of the attachment link are of convoluted form, with hairpin loops 35 interposed between the straddling portion 20 and the connecting eyes 40. In the event of a fall or some other situation which applies a sudden shock load to the system, the legs 30 deform by straightening of the loops 35 so that sudden shock forces are dissipated. The sudden shock forces are absorbed in such a way that the falling load experiences a gentle braking force rather than a jolt, so that stresses on the system and on the load are minimised.

Another advantage of this particular arrangement is that a visible indication is provided that the system has been subjected to loading sufficient to cause deformation of the attachment link. This serves as a clear reminder to would-be users of the system that some of its components may need replacement before it can be utilised safely.

In Figure 1a, the eyes 40 of the respective legs 30 are shown in alignment and sufficiently close that they are linkable by a single karabiner/hook. The eyes 40 are oriented with their common axis parallel to the longitudinal axis of the elongate element 50. This necessitates slightly offsetting the respective legs 30 so that one overlies the other as best seen with reference to Figure 1b.

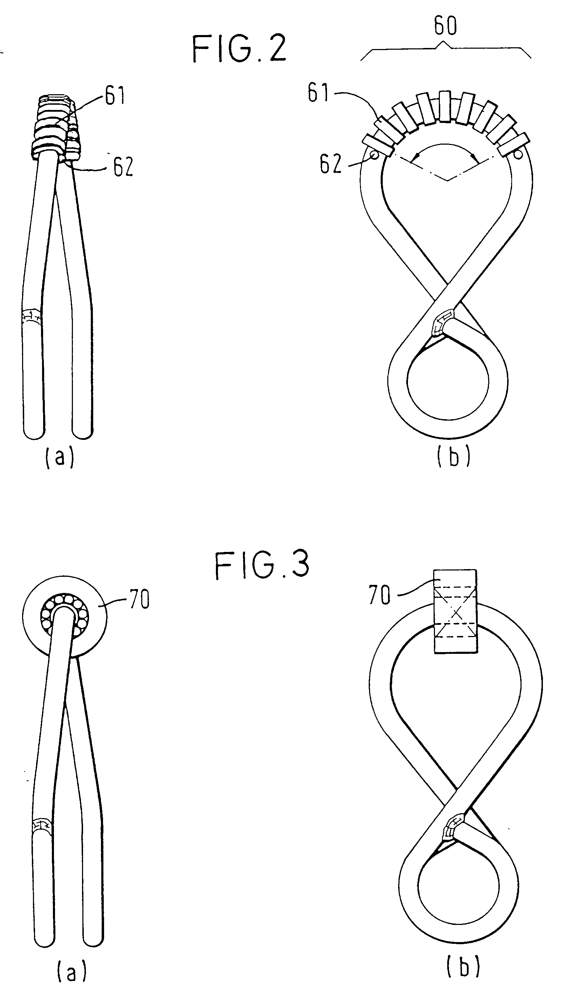

In Figure 2, views (a) and (b) omit the elongate element 50 and the loops 35 for clarity. This attachment link is provided with an array 60 of low friction rings 61 arranged around the arc of its straddling portion. The rings 61 may be formed of any suitable low friction material, such as phosphor bronze or plastic. As shown, the rings are held in place over the operating arc of the straddling portion by raised formations such as pimples 62. It is also possible for the straddling portion itself to be provided with a low friction coating, though such an arrangement is not depicted in Figure 2.

Figure 3 shows an alternative arrangement in which an arrangement of rolling element bearings 70 is mounted on the straddling portion of the attachment link. Again, elongate element 50 and loops 35 have been omitted from the views in this Figure for clarity. The arrangement shown here is particularly well adapted for minimising the effects of wear on the elongate element, as well as on the attachment link itself, in situations where heavy loads are encountered. For optimum performance, the attachment link with its bearings must be matched to a suitably-configured elongate element support system which is able to accommodate the bulk of the link in the space formed between the rotating wheel and the cooperating slipper part.

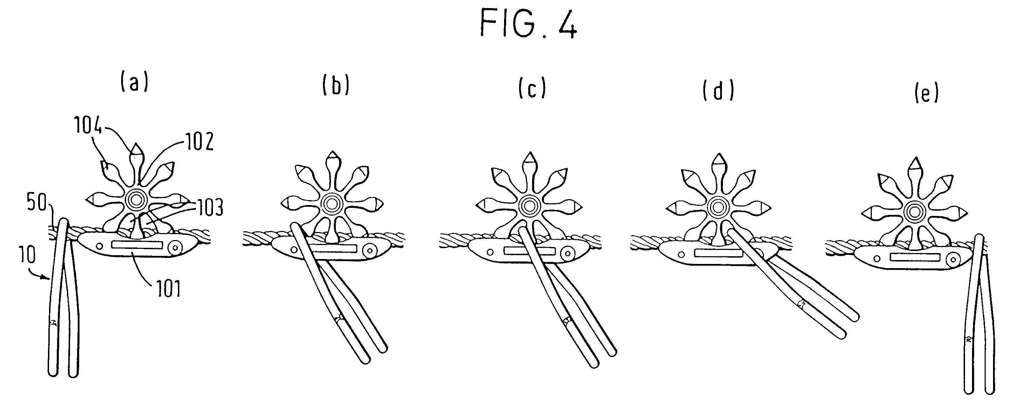

In Figure 4, an attachment link 10 in accordance with the present invention is shown negotiating a support device for an elongate element 50. Support devices of this type are described in more detail in the Applicant's European Patent No. 0 124 189. The views in Figure 4 omit loops 35 for clarity.

In view (a), the attachment link 10 is seen approaching the support device from the left. The support device comprises a rotatable wheel 102 provided with a series of recesses 103 at spaced locations around its periphery. Adjacent recesses are separated by projecting parts 104 of the wheel. A cooperating slipper part 101 is mounted on the wheel with the aid of formations (not shown) which inter-engage with complementary formations on the projecting parts 104 of the wheel. Elongate element 50 is retained in a space formed between the wheel 102 and the slipper part 101.

In view (b), the attachment link 10 is shown engaging one of the projecting parts 104 of the wheel 102. This engagement causes rotation of the wheel 102 in a counter-clockwise direction as seen in Figure 4.

Views (c) and (d) show the attachment link 10 captured in one of the recesses 103 of the wheel 102 and riding over the slipper part 101 as the wheel continues its counter-clockwise rotation.

Finally, in view (e), the attachment link 10 is shown after release from the recess 103, having traversed the support device without detachment from the elongate element 50.

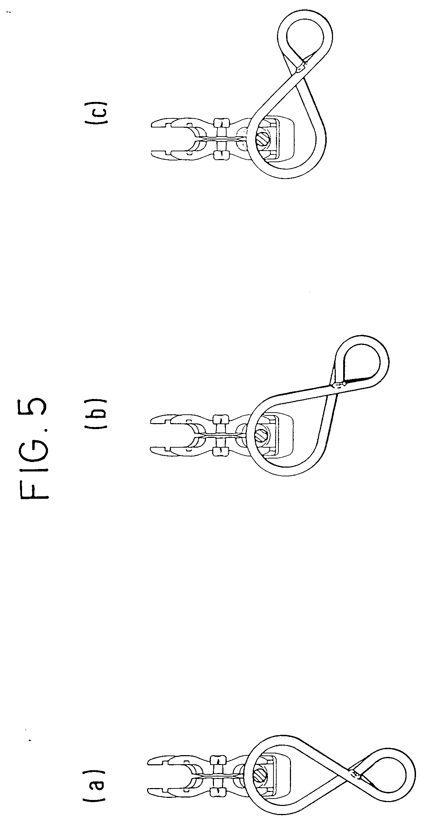

Referring now to Figure 5, views (a) to (c) show an attachment link 10 in accordance with the present invention in a direction looking along the longitudinal axis of an elongate element 50. These views show how the attachment link can be oriented at a wide variety of angles relative to the elongate member whilst still being capable of traversing rotary support devices therefor. Again, loops 35 have been omitted for clarity.

Whilst the present invention has been particularly described with reference to a number of exemplified embodiments, it will be appreciated by persons skilled in the art that various modifications may be made without departing from the scope of the claims which follow.

## Claims

1. A link (10) for attaching a load-bearing attachment to an elongate element (50), the link (10) comprising a substantially C-shaped straddling portion (20) having a pair of legs (30) each provided with a connecting eye (40), said legs (30) having a gap therebetween to accommodate an elongate element (50) and said connecting eyes (40) being aligned to receive a portion of a load-bearing attachment, characterised in that each of said legs (30) includes a convoluted portion interposed between the straddling portion (20) and its respective connecting eye (40) in which the material of the leg (30) is bent back upon itself to form a series of hairpin loops (35).

2. A link (10) as claimed in claim 1 wherein the legs (30) are deformable by straightening of said loops (35) in response to the application of a predetermined tensile load.

3. A link (10) as claimed in claim 1 or claim 2, the arrangement being such that receipt of a load-bearing attachment through the connecting eyes (40) of the link (10) forms a closed loop which prevents disengagement of the link (10) from an elongate element (50) accommodated between said legs (30).

4. A link (10) as claimed in any preceding claim wherein low friction means (60, 70) are provided on the straddling portion (20) of the link (10).

5. A link (10) as claimed in claim 4 wherein the low friction means comprises a series of rings or beads (60) of low friction material.

6. A link (10) as claimed in claim 4 wherein the low friction means comprises one or more rolling element bearings (70).

## Patentansprüche

1. Glied (10) zum Verbinden eines lasttragenden Verbindungsgliedes mit einem Langteil (50), wobei das Glied besteht aus einem im wesentlichen C-förmigen Erweiterungsabschnitt (20) mit einem Paar von Schenkeln (30), das je eine Verbindungsöse (40) aufweist, wobei zwischen den Schenkeln (30) ein Schlitz ausgebildet ist, um ein Langteil (50) und die Verbindungsösen (40) so auszurichten, um einen Abschnitt des lasttragenden Verbindungsgliedes aufzunehmen, dadurch gekennzeichnet, daß jeder der Schenkel (30) zwischen dem Erweiterungsabschnitt (20) und seiner zugehörigen Verbindungsöse (40) einen Wickelabschnitt aufweist, in welchem das Material des Schenkels (30) über den Schenkel selbst zurückgebogen ist, um eine Reihe von Haarspangenschleifen (35) zu bilden.

2. Glied (10) nach Anspruch 1, wobei die Schenkel (30) durch Strecken der Haarspangenschleifen (35) in Abhängigkeit von der Anwendung einer vorbestimmten Zugbelastung deformierbar sind.

3. Glied (10) nach Anspruch 1 oder 2, wobei das Verbindungsglied derart ist, daß die Aufnahme eines lasttragenden Verbindungsgliedes durch die Verbindungsösen (40) des Gliedes (10) hindurch eine geschlossene Schleife bildet, die ein Lösen des Eingriffes des Gliedes (10) vom Langteil (50), das zwischen den Schenkeln (30) angeordnet ist, verhindert.

4. Glied (10) gemäß einem der vorgehenden Ansprüche, wobei eine Einrichtung mit geringer Reibung (60, 70) am Erweiterungsabschnitt (20) des Gliedes (10) vorgesehen ist.

5. Glied (10) nach Anspruch 4, wobei die Einrichtung mit geringer Reibung aus einer Serie von Ringen oder Wulsten (60) aus Material mit niedriger Reibung besteht.

6. Glied (10) nach Anspruch 4, wobei die Einrichtung mit niedriger Reibung ein Lager (70) mit einem oder mehreren Rollelementen ist.

## Revendications

1. Lien (10) destiné à fixer une fixation portant une charge à un élément (50) oblong, le lien (10) comportant une partie (20) à califourchon sensiblement en forme de C ayant une paire de jambes (30) munies chacune d'un oeillet (40) de connexion, les jambes (30) ayant entre elles un interstice destiné à recevoir un élément (50) oblong et les oeillets (40) de connexion étant alignés pour recevoir une partie du dispositif de fixation portant une charge, caractérisé en ce que chacune des jambes (30) comporte une partie convolutée interposée entre la partie (20) à califourchon et son oeillet (40) de connexion respectif dans laquelle le matériau de la jambe (30) est recourbé sur soi-même pour former une série de boucles (35) en forme d'épingles à cheveux.

2. Lien (10) suivant la revendication 1 dans lequel les jambes (30) peuvent être déformées par raidissement des boucles (35) en réponse à l'application d'une charge en traction déterminée à l'avance.

3. Lien (10) suivant la revendication 1 ou la revendication 2, l'agencement étant tel que la réception d'un dispositif de fixation portant une charge par les oeillets (40) de connexion du lien (10) forme une boucle fermée qui empêche le désengagement du lien (10) d'un élément (50) oblong qui est reçu entrer les jambes (30).

4. Lien (10) suivant l'une quelconque des revendications précédentes dans lequel des moyens (60, 70) à faible frottement sont prévus sur la partie (20) à califourchon du lien (10).

5. Lien (10) suivant la revendication 4 dans lequel les moyens à faible frottement comportent une série de bagues ou de perles (60) en un matériau à faible frottement.

6. Lien (10) suivant la revendication 4 dans lequel les moyens à faible frottement comportent un ou plusieurs paliers (70) à éléments à roulement.
